# EUROPÄISCHE PATENTSCHRIFT

(11) **EP 1 575 355 B1**
(45) Veröffentlichungstag und Bekanntmachung des Hinweises auf die Patenterteilung: **02.08.2006**
(21) Anmeldenummer: 03795753.7
(22) Anmeldetag: 17.12.2003
(51) Int. Cl.: A01M 1/02, A01M 1/08, A01M 1/14

(54) **INSEKTENFALLE**
INSECT TRAP
PIEGE A INSECTES

(30) Priorität: 18.12.2002 DE 10259651; 19.12.2002 US 434563 P
(43) Veröffentlichungstag der Anmeldung: 21.09.2005
(73) Patentinhaber: Universität Regensburg, 93053 Regensburg (DE)
(72) Erfinder: GEIER, Martin, 93053 Regensburg (DE); ROSE, Andreas, 93053 Regensburg (DE); EIRAS, Alvaro, E., Belo Horizonte, MG 31270-901 (BR)
(74) Vertreter: Benninger, Johannes
(86) Internationale Anmeldenummer: PCT/DE2003/004162
(87) Internationale Veröffentlichungsnummer: WO 2004/054358

(56) Entgegenhaltungen:
- EP-A- 0 475 665
- WO-A-97/01272
- FR-A- 693 878
- GB-A- 424 235
- US-A- 1 478 424
- US-A- 5 505 017

## Beschreibung

Die Erfindung betrifft eine Insektenfalle, insbesondere für Flug- und/oder Schädlingsinsekten mit den Merkmalen des Oberbegriffs des unabhängigen Patentanspruchs 1, siehe z.B Dokument CA-A- 1 227 929.

Blutsaugende Insekten zählen zu den bedeutendsten Hygieneschädlingen weltweit, da sie zahlreiche Krankheiten auf Mensch (bspw. Malaria, Gelbfieber, Dengue u.a.) und Tiere übertragen und zudem ausgesprochen lästig sein können. Eine Möglichkeit zur großflächigen Bekämpfung dieser Schädlinge ist der Einsatz von Insektiziden. Eine weitere Möglichkeit zur Kontrolle und Bekämpfung von Schadinsekten ist der Einsatz von Fallensystemen, die sich jedoch vorwiegend nur für kleinere Bereiche, insbesondere für geschlossene Räume eignen.

Insektenfallen sind in vielen Ausführungsformen und Varianten bekannt. Einfache Varianten bestehen beispielsweise in Leimruten, die mit Lockstoffen versehen sind und auf denen die Insekten nach einem Kontakt festgehalten werden. Andere Varianten emittieren ultraviolettes Licht oder Ultraschall und versuchen auf diese Weise, Schadinsekten anzulocken. Es sind auch Vorrichtungen bekannt, die Geruchs- und Lockstoffe aussenden, beispielsweise mit Hilfe einer Luftströmung, wonach die dadurch angelockten Insekten mit Hilfe einer gegensinnigen Luftströmung in einen Hohlraum eingesaugt und dort gefangen gehalten werden.

Derartige Fallensysteme sind beispielsweise in der US 2001/004 50 51 A1 und in der US 62 86 249 B1 beschrieben. Bei dieser Fallenart wird ein Lockstoff durch ein innerhalb eines zylindrischen Rohres angeordneten Gebläses verteilt und soll für das Anlocken von Insekten sorgen. Sobald diese in die Nähe der Falle gelangen, werden sie durch einen Luftstrom angesaugt und in das Innere der Falle gezogen. Hierzu ist um das zylindrische Rohr ein weiteres Rohr angeordnet. Im Zwischenraum zwischen den beiden konzentrisch angeordneten Rohren wird eine Saugströmung erzeugt, die für das Ansaugen der Insekten in das Falleninnere sorgt.

Bei bekannten Fallenvarianten wird insbesondere Kohlendioxid verströmt, da dieses Gas von den Insekten als Bestandteil der menschlichen und tierischen Atemluft erkannt und damit als attraktiv empfunden wird.

Die Wirksamkeit und Effektivität der bisher bekannten Fallensysteme ist allerdings durchweg begrenzt, da sie meist nicht für das gewünschte weitgehende Unschädlichmachen der in einem Raum oder in einer Umgebung befindlichen Insekten sorgen können. Zudem sind die Fallensysteme, bei denen Kohlendioxid verströmt wird, relativ teuer in der Anschaffung und im Betrieb.

Ein Ziel der vorliegenden Erfindung besteht darin, eine Insektenfalle zur Verfügung zu stellen, die einfach aufgebaut, zudem kostengünstig und dabei möglichst effektiv ist.

Dieses Ziel der Erfindung wird mit dem Gegenstand des unabhängigen Patentanspruchs erreicht. Merkmale vorteilhafter Weiterbildungen der Erfindung ergeben sich aus den jeweiligen abhängigen Ansprüchen.

Ein erster Aspekt einer erfindungsgemäßen Insektenfalle, die insbesondere zum Anlocken von Flug- und/oder Schädlingsinsekten dient, weist eine ebene oder eine gewölbte, helle Fläche und wenigstens eine innerhalb dieser Fläche angeordnete, dunkle Kontraststelle auf. Die Insektenfalle weist weiterhin Einrichtungen zum Festhalten, Fangen und/oder zum Abtöten von angelockten Insekten auf einer Oberfläche der Falle und/oder in einem darin angeordneten Hohlraum auf. Bei diesem ersten Aspekt einer Insektenfalle wird sich die Erkenntnis zu Nutze gemacht, dass dunkle Objekte für viele Insekten eine Signalwirkung hat und diese anlockt. Versuche mit diesem erfindungsgemäßen Fallenaspekt haben gezeigt, dass eine helle Oberfläche mit einem darin angeordneten dunklen Fleck, bspw. in deren Mitte, für bestimmte Insekten sehr attraktiv ist und diese anlockt. Bisher war lediglich bekannt, dass dunkle Objekte in der Lage sein können, bestimmte Insektenarten anzulocken. Die Erfindung macht sich die bessere Signalwirkung einer dunklen Kontraststelle auf einer hellen Oberfläche zu Nutze.

Ein zweiten Aspekt der Insektenfalle weist eine Ausströmfläche zur Erzeugung bzw. zur Abgabe einer von der Fläche ausgehenden, schwachen Luftströmung sowie Einrichtungen zum Festhalten, Fangen und/oder Abtöten von angelockten Insekten auf einer Oberfläche der Falle und/oder in einem darin angeordneten Hohlraum auf. Bei Versuchen hat sich der überraschende Effekt gezeigt, dass eine großflächige, schwache und gleichmäßig verteilte Luftströmung für viele Schadinsekten ebenfalls attraktiv ist und diese anlocken kann. Erklären lässt sich dies damit, dass die großflächige, schwache Luftströmung einer von einem menschlichen oder tierischen Körper abgegebenen Wärmeströmung gleicht, die von vielen Insekten, insbesondere von Stechmücken (aedes aegypti) und Blut saugenden Insekten erkannt und als attraktiv empfunden wird.

Erfindungsgemäβ ist eine helle Fläche mit einer dunklen Kontraststelle gleichzeitig mit einer Ausströmfläche versehen oder als solche ausgebildet ist. Hierdurch lässt sich die Effektivität der Falle verbessern.

Eine Ausführungsform der erfindungsgemäßen Insektenfalle sieht vor, dass zumindest die helle Fläche mit Leim und/oder einem Insektizid versehen ist.

Zusätzlich kann auch die dunkle Kontraststelle mit Leim und/oder einem Insektizid versehen sein, so dass die Oberfläche der Falle als Haftmittel für die angelockten Insekten fungieren kann. Alternativ können die Insekten bei einem Kontakt mit einer Fallenoberfläche abgetötet werden. Dies kann auch durch eine Beaufschlagung einer Oberfläche der Insektenfalle mit einer elektrischen Spannung, beispielsweise mit Hilfe eines unter Spannung stehenden Drahtgitters oder dergleichen erreicht werden.

Die von der Ausströmfläche emittierte, schwache Luftströmung weist vorzugsweise eine mittlere Strömungsgeschwindigkeit zwischen 2 und 100 cm/s, besser zwischen 3 und 50 cm/s, vorzugsweise jedoch von 5 bis 20 cm/s auf, so dass die schwache Luftströmung besonders gut die von einem menschlichen oder tierischen Körper erzeugte Konvektionsströmung der Luft imitieren kann.

Eine besonders bevorzugte Ausführungsform der Insektenfalle sieht vor, dass zusätzlich von der Falle ein Lockstoff emittiert wird. Hierbei wird sich die Erkenntnis zunutze gemacht, dass der Geruch eines menschlichen oder tierischen Körpers für Insekten dann besonders attraktiv ist, wenn er in einer schwachen, gleichmäßig verteilten Luftströmung transportiert wird. Es sind Fallen bekannt, mit denen Kohlendioxid verteilt wird. Dies ist ein Lockstoff, der auch in der Atemluft enthalten ist. Eine derartige Kohlendioxidabgabe ist dann für Insekten besonders attraktiv, wenn die Strömung diskontinuierlich ist und in Duftfilamenten angeboten wird. Dagegen wird ein den Hautgeruch imitierender Lockstoff insbesondere dann von den Insekten als attraktiv empfunden, wenn er in einer schwachen Luft- bzw. Konvektionsströmung transportiert wird, wie es die vorliegenden Erfindung vorsieht.

Vorzugsweise kann der Lockstoff von Teilen oder der gesamten hellen Fläche emittiert werden. Der Lockstoff kann beispielsweise in einer Beschichtung der hellen Fläche gebunden und in einer definierbaren Konzentration abgegeben werden. Hierfür eignet sich beispielsweise ein Bindemittel auf der hellen und/oder dunklen Fläche, in dem die flüchtigen Lockstoffe gelöst sind und in definierbarer Konzentration abgegeben werden. Ein solches Bindemittel kann insbesondere Leim sein, auf dem anfliegende Insekten haften bleiben. Damit der Lockstoff gleichmäßig abgegeben wird und in einer Konvektionsströmung transportiert wird, kann eine Beheizung der Fallenoberfläche vorgesehen sein, bspw. mittels Heizdrähten oder dergleichen.

Erfindungsgemäβ sieht eine Kombination der olfaktorischen und der visuellen Reize für die Insekten vor wobei die Ausströmfläche als helle Fläche mit wenigstens einer innerhalb dieser angeordneten, dunklen Kontraststelle ausgebildet ist. Die helle Fläche weist eine Größe von typischerweise wenigstens 30 cm² auf, sollte vorzugsweise jedoch eine Größe von mindestens 100 cm² aufweisen, um den gewünschten Effekt auch auf größerer Entfernung auszuüben. Eine solch kombinierte, optische und olfaktorische Wirkung der erfindungsgemäßen Insektenfalle imitiert besonders gut menschliche und tierische Körper, so dass eine solche Falle eine hohe Attraktivität und damit eine hohe Wirksamkeit für viele Insekten, insbesondere für Blut saugende Arten, aufweist.

Eine weitere Ausführungsform der Erfindung sieht vor, dass wenigstens eine Ansaugöffnung zum Ansaugen von angelockten Insekten vorgesehen ist. Alternativ können auch mehrere Ansaugöffnungen um die helle Fläche bzw. um die Ausströmfläche angeordnet sein. Es kann insbesondere auch eine ringförmige Ansaugöffnung um die helle Fläche ausgebildet sein. Hierdurch können die angelockten Insekten in einen Hohlraum oder einen Behälter eingesaugt werden, in dem sie gesammelt und aus dem sie nicht mehr fliehen können. Gegebenenfalls kann in diesem Hohlraum ein Insektizid eingebracht sein, so dass die Insekten an Ort und Stelle abgetötet werden.

Eine bevorzugte Ausgestaltung der Erfindung sieht vor, dass die dunkle Kontraststelle als dunkler Ansaugkanal ausgebildet ist. D.h., eine Innenmantelfläche des rohrförmigen Ansaugkanals ist vorzugsweise dunkel beschichtet, so dass der Ansaugkanal selbst als dunkle Kontraststelle auf der hellen Fläche wirken kann. Eine Strömungsgeschwindigkeit am bzw. im Ansaugkanal bzw. in der wenigstens einen Ansaugöffnung beträgt vorzugsweise mehr als 1 m/s und kann in bevorzugter Ausgestaltung ca. 2 m/s betragen. Auf diese Weise kann sichergestellt werden, dass Insekten, die in die Nähe des Ansaugkanals oder der Ansaugöffnung gelangen, zuverlässig eingesaugt werden und nicht mehr fliehen können. Gleichzeitig wird sichergestellt, dass die Insekten nicht gegen die Luftströmung anfliegen können und beispielsweise nach ihrem Fangen den Hohlraum wieder verlassen können.

Eine weitere bevorzugte Ausführungsform der Erfindung sieht wenigstens einen in der Falle angeordneten Ventilator zur Erzeugung der Ansaugströmung und/oder der schwachen Luftströmung aus der Ausströmfläche vor. Der Ventilator kann insbesondere eine Ringströmung erzeugen, wobei ein Sog durch die Ansaugöffnung bzw. durch den Ansaugkanal erzeugt und die hier eingesaugte Luft wieder über die größere Ausströmfläche als gleichmäßige, schwache Luftströmung abgegeben wird. Die Größenverhältnisse des Ansaugkanals und der Ausströmfläche müssen in diesem Fall so aufeinander abgestimmt werden, dass die gewünschten Luftgeschwindigkeiten erreicht werden.

Vorzugsweise ist eine innerhalb der Falle angeordnete Einrichtung zur gleichmäßigen Abgabe des Lockstoffs vorgesehen. Eine solche Einrichtung kann insbesondere aus mehreren Flakons mit den Einzelkomponenten des Lockstoffs oder aus unterschiedlichen Röhrchen mit darin angeordneten Lockstoffkomponenten bestehen, da der Lockstoff typischerweise nicht als Gemisch, sondern in Einzelkomponenten aufbewahrt werden muss und erst bei der Abgabe an die Luft zu einem Lockstoffgemisch wird. Als derartiger Lockstoff kommt insbesondere ein Gemisch aus Milchsäure, Capronsäure und Ammoniak in Frage, wie er beispielsweise in der provisorischen US-Anmeldung Nr. 60/386,582 vom 07.06.2002 offenbar ist. Die in dieser Anmeldung genannten Wirkstoff- und Lockstoffkombinationen und -gemische werden hiermit ausdrücklich in den Offenbarungsumfang der vorliegenden Anmeldung miteinbezogen.

Die Ausströmfläche kann eine Bespannung mit einem hellen Gewebe aufweisen, deren Maschenweite kleiner ist als die Größe der angelockten Insekten. Auf diese Weise kann einerseits die helle Fläche gebildet und andererseits die Falle nach außen hin abgeschlossen werden, so dass darin gefangene Insekten nicht mehr durch das Gewebe hindurchfliegen können.

Der Ansaugkanal weist vorzugsweise eine Mindestlänge auf, die eine ausreichend gleichmäßige Strömung im Kanal und in unmittelbarer Nähe des Kanals bewirkt. Eine typische Länge des Ansaugkanals kann beispielsweise zwischen 5 und 10 cm oder mehr betragen. Ein typischer Durchmesser des Ansaugkanals kann beispielsweise zwischen 3 und 15 cm betragen. Die Abmessungen der Ausströmfläche und des Ansaugkanals richten sich insbesondere nach der gewünschten Größe der Falle und nach den gewünschten Verhältnissen der Strömungsgeschwindigkeiten im Kanal und aus der Ausströmrichtung. Auch die typische Größe der bevorzugt angelockten Insekten beeinflusst die sinnvollen Abmessungen des Ansaugkanals und der Falle.

Eine Ausgestaltung der Erfindung sieht eine zusätzliche Gewebebespannung vor dem Ventilator vor, so dass die angesaugten Insekten nicht in das Falleninnere gelangen, sondern an der Unterseite des Ansaugkanals gesammelt werden. Eine vorteilhafte Ausgestaltung sieht ein Einsatzmodul vor dem Ventilator im Kanal vor, das gegebenenfalls mit einem Klebstoff oder mit einem Insektizid versehen sein kann und das in regelmäßigen Abständen aus der Falle entnommen und entleert werden kann. Um zu verhindern, dass die angesaugten Insekten wieder fliehen können, kann bspw. sichergestellt werden, dass das Ventilatorgebläse permanent läuft. Soll der Ventilator nicht permanent laufen, kann es vorteilhaft sein, eine reusenartigen Fangbehälter vorzusehen, aus dem die Insekten nicht mehr fliehen können. Bei einer solchen Variante kann das Gebläse wahlweise in einem Intervallbetrieb laufen.

Eine bevorzugte Form der erfindungsgemäßen Insektenfalle sieht einen hohlzylindrischen Körper mit stirnseitig angeordneter Ausströmfläche und einen ins Innere des hohlzylindrischen Körpers führenden, dunklen Ansaugkanal vor. Die Stirnfläche kann wahlweise nach außen oder nach innen gewölbt sein. Weiterhin ist vorzugsweise eine geschlossene Bodenfläche mit darauf angeordneter Einrichtung zur Abgabe des Lockstoffs vorgesehen.

Die Stirnfläche der hohlzylindrischen Falle weist vorzugsweise nach oben. Die Falle weist damit gegenüber einer Falle, die Kohlendioxid verströmt, den Vorteil einer besseren Erkennbarkeit für Insekten auf, da diese die helle Oberfläche bzw. den ausströmenden Lockstoff besser wahrnehmen können als bei einer nach unten weisenden Wirkfläche der Falle. Kohlendioxidfallen verströmen dieses normalerweise nach unten, da das CO₂ schwerer als Luft ist und nach unten sinkt.

Eine alternative Ausgestaltung der Erfindung sieht eine Falle in Kugelform mit einem oder mehreren über deren Oberfläche verteilt angeordneten Ansaugkanälen vor. Zumindest Teile der Kugeloberfläche können als Ausströmöffnungen ausgebildet sein. Vorzugsweise jedoch ist bei einer solchen Insektenfalle weitgehend die gesamte Kugeloberfläche als Ausströmöffnung ausgebildet.

Eine weitere erfindungsgemäße Ausgestaltung sieht eine oberhalb der Falle und beabstandet zu dieser angeordneten Abdeckung, die als Witterungsschutz dient. Die Abdeckung kann insbesondere verhindern, dass Regen die Falle in ihrer Wirkung beeinträchtigen oder unwirksam machen kann. Die Abdeckung kann wahlweise transparent sein, damit die Insekten die helle Fläche mit dem dunklen Kontrastfleck wahrnehmen können. Alternativ hierzu kann die Abdeckung selbst als optisches Lockmittel ausgestaltet sein. Hierzu kann sie insbesondere als helle Fläche mit einem oder mehreren dunklen Kontraststellen ausgestaltet sein.

Die Falle ist vorzugsweise frei aufgehängt, bspw. an einer Schnur oder Kette, mittels derer sie an einem Baum, einem Gestell oder einer anderen geeigneten Stelle aufgehängt sein kann.

Die erfindungsgemäßen Insektenfallen eignen sich nicht nur zur Schädlingsbekämpfung in geschlossenen Räumen und im Freien, sondern auch zur Erfassung einer Insektendichte in einem bestimmten Gebiet. Bei diesem sog. Monitoring werden derartige Fallen in einem zu überwachenden Gebiet während einer vorbestimmten Zeitdauer aufgestellt, wonach die Menge der gefangenen Insekten gemessen wird. Dieses Monitoring kann insbesondere dazu dienen, die Notwendigkeit bzw. die Effektivität von Schädlingsbekämpfungsmaßnahmen vor deren Durchführung zu bestimmen und/oder nachträglich zu messen.

Die Erfindung wird nachfolgend anhand bevorzugter Ausführungsbeispiele unter Bezugnahme auf die beiliegenden Zeichnungen näher erläutert. Dabei zeigt:
- Figur 1: eine schematische Draufsicht auf eine Fallenoberfläche einer Insektenfalle,
- Figur 2: ein schematischer Querschnitt einer ersten Variante der Insektenfalle, aber nicht gemäß der Erfindung,
- Figuren 3 bis 5: alternative Varianten von Insektenfallen in schematischen Querschnittdarstellungen,
- Figur 6: eine schematische Draufsicht auf eine weitere alternative Variante einer Insektenfalle,
- Figur 7: ein schematischer Querschnitt des Fallenprinzips der Figur 6,
- Figur 8: eine weitere Variante einer Insektenfalle in schematischer Draufsicht,
- Figur 9: ein schematischer Querschnitt der Falle gemäß Figur 8,
- Figur 10: eine schematische Perspektivdarstellung einer erfindungsgemäßen I nsektenfalle,
- Figur 11: eine Prinzipdarstellung einer alternativen Variante einer erfindungsgemäßen Insektenfalle und
- Figur 12: eine frei aufgehängte Falle mit einer Abdeckung, aber nicht gemäß der Erfindung

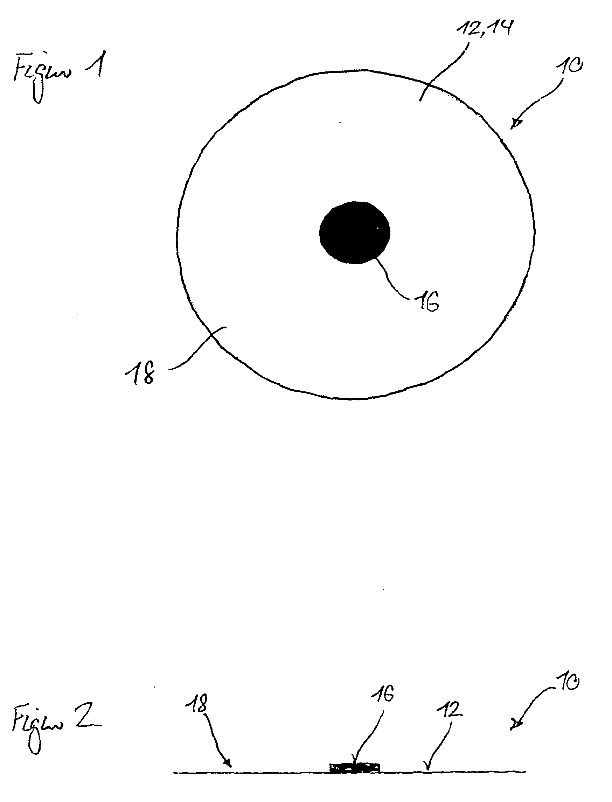

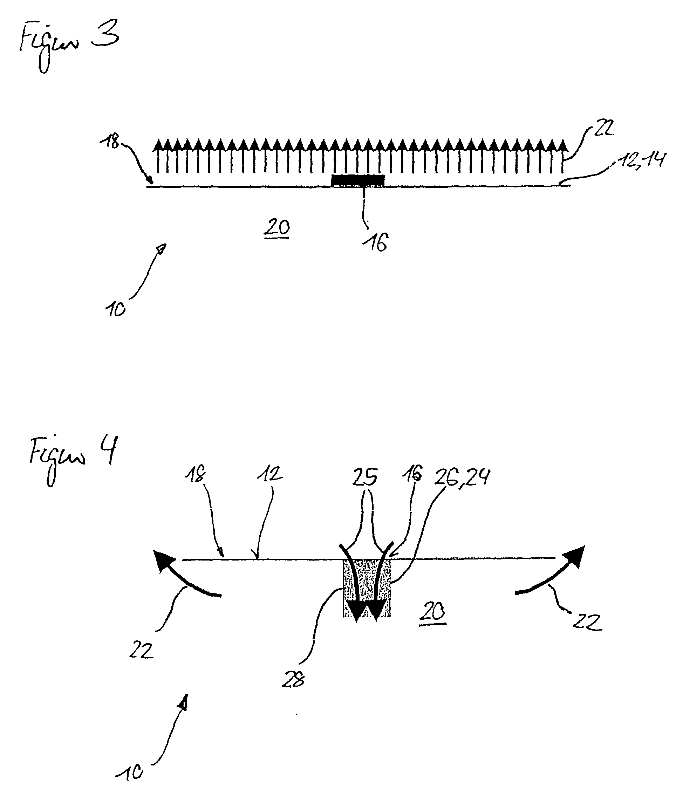

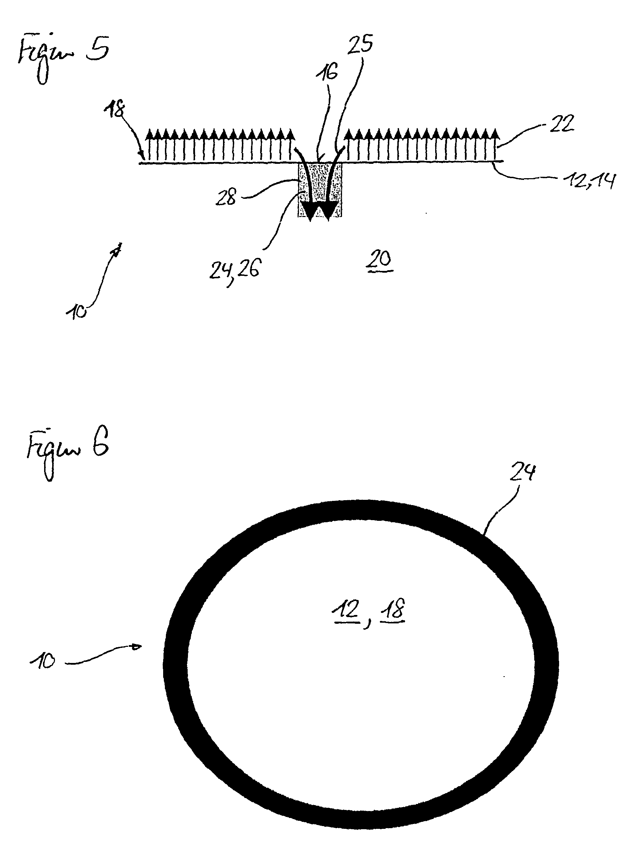

Die schematische Draufsicht der Figur 1 verdeutlicht das Grundprinzip der optischen Wirkungsweise der Insektenfalle 10. Diese weise eine Fallenoberfläche 18 auf, die aus einer hellen Fläche 12 und einer innerhalb der hellen Fläche 12 angeordneten Kontraststelle 16 besteht. Die Kontraststelle 16 ist gegenüber der hellen Fläche 12 deutlich dunkler, insbesondere schwarz. Die gesamte Oberfläche 18 oder Teile davon kann je nach Ausgestaltung der Insektenfalle 10 gleichzeitig als Ausströmfläche 14 fungieren, die eine schwache Luftströmung 22 abgibt (vgl, hierzu die Figuren 3, 5, 7 und 9). Was in den folgenden Figuren als runde Fallenoberfläche 18 gezeigt ist, kann ebenso jede andere denkbare Kontur aufweisen. Die Fallenoberfläche 18 muss auch nicht eben, sondern kann ebenso gut nach innen oder außen gewölbt sein.

Figur 2 verdeutlicht eine einfache erste Variante der Insektenfalle 10 in einem schematischen Querschnitt, aber nicht gemäß der Erfindung. Erkennbar ist hierbei die gleichmäßig helle Fläche 12 auf der Fallenoberfläche 18 und die ungefähr mittig angeordnete Kontraststelle 16. Eine solche Falle arbeitet ausschließlich auf Basis eines optischen Reizes, da ein dunkler oder schwarzer Kontrast gegenüber einer hellen Oberfläche für viele Insekten als attraktiv empfunden und bevorzugt angeflogen wird. Die dunkle Kontraststelle 16 kann in diesem Fall vorzugsweise mit Leim oder einem Insektizid behandelt sein, so dass die anfliegenden Insekten gefangen und/oder abgetötet werden.

Figur 3 verdeutlicht in einem weiteren schematischen Querschnitt eine zweite Variante einer Insektenfalle 10, bei der die helle Fläche 12 als Ausströmfläche 14 ausgebildet ist. Aus dieser Ausströmfläche 14 tritt eine gleichmäßige, schwache Luftströmung 22 aus, die vorzugsweise eine Strömungsgeschwindigkeit von weniger von 100 cm/s aufweist. Insbesondere kann die Strömungsgeschwindigkeit der schwachen Luftströmung 22 bei ca. 5 bis 20 cm/s liegen und ist dadurch in der Lage, eine Wärmekonvektionsströmung einer menschlichen oder tierischen Haut so nachzubilden, dass sie für Insekten als attraktiv empfunden wird. Die schwache Luftströmung 22 kann insbesondere durch eine als Gewebe ausgebildete Ausströmfläche 14 austreten. Auch die Kontraststelle 16 in der Mitte der als helle Fläche 12 ausgestalteten Ausströmfläche 14 kann als Ausströmfläche ausgebildet sein. Diese zweite Variante macht sich neben der optischen Wirkung des dunklen Kontrastflecks in der Mitte den mechanischen Reiz der schwachen Luftströmung zunutze, der für viele Insekten als attraktiv empfunden wird, da sie der Wärmekonvektionsströmung einer Hautoberfläche nachgebildet ist. Es hat sich bei Versuchen der überraschende Effekt gezeigt, dass Blut saugende Insekten von einer solchen Luftströmung angezogen werden und sie offenbar für eine Wärmekonvektionsströmung eines Körpers halten.

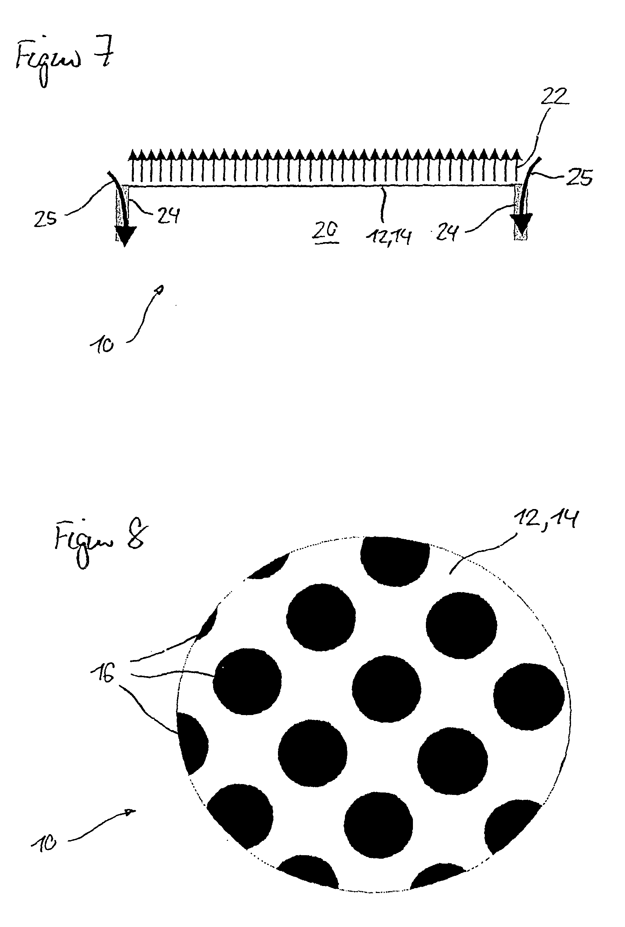

Figur 4 zeigt eine Variante der Insektenfalle 10 in einem schematischen Querschnitt, aber nicht gemäß der Erfindung. Diese Variante sieht eine schwache Luftströmung 22 außerhalb der hellen Fläche 12 vor. Weiterhin ist die Kontraststelle 16 als Ansaugöffnung 24 ausgestaltet, im gezeigten Ausführungsbeispiel als Ansaugkanal 26, durch den eine Ansaugströmung 25 in einen Hohlraum 20 der Insektenfalle 10 erzeugt wird. Die schwache Luftströmung 22 kann bei dieser Variante der Insektenfalle 10 wahlweise als Transportmittel für eine Lockstoff dienen, der für die anzulockenden Insekten attraktiv ist. Der Lockstoff kann insbesondere Ausdünstungen eines menschlichen oder tierischen Körpers nachahmen und aus mehreren Komponenten bestehen, die bei der Abgabe an die Luftströmung 22 zu einem Duftgemisch zusammengesetzt werden.

Die Ansaugströmung 25 ist zumindest so stark, dass in einen Nahbereich der Falle gelangende Insekten in den Ansaugkanal 26 eingezogen werden und diesen nicht mehr verlassen können. Bei einer dunklen Beschichtung einer Innenmantelfläche 28- des Ansaugkanals 26 wirkt dieser als Kontraststelle 16, so dass diese Fallenvariante einen optischen Reiz mit einem mechanischen (Luftströmung) und/oder einem olfaktorischen Reiz (Lockstoff) kombiniert. Mit einer solchen Wirkkombination sind besonders hohe Fangraten erzielbar, da die Insekten auf mehrfache Weise angesprochen und angelockt werden.

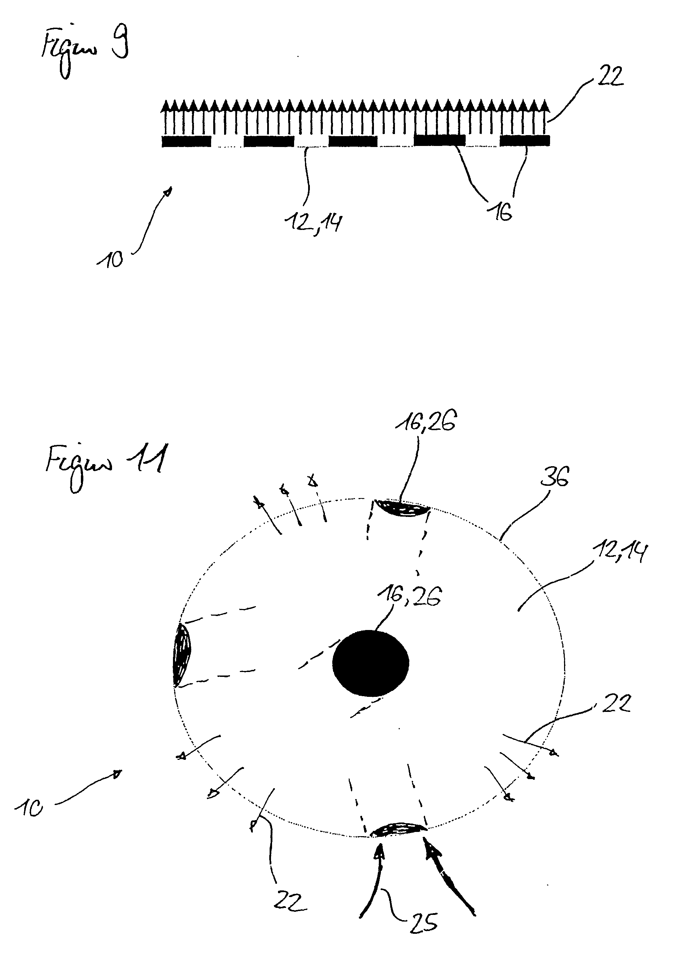

Die Figur 5 zeigt einen schematischen Querschnitt einer weiteren Variante der erfindungsgemäßen Insektenfalle 10, bei der die helle Fläche 12 als Ausströmfläche 14 ausgestaltet ist, durch die die schwache Luftströmung 22 hindurchtritt. Die Kontraststelle 16 ist wiederum als dunkel ausgekleidete Ansaugöffnung 24 bzw. -kanal 26 ausgebildet, durch die/den eine stärkere Ansaugströmung 25 mit einer Strömungsgeschwindigkeit von mehr als 1 m/s, vorzugsweise von bis zu 2 m/s oder mehr hindurchtritt. Durch den Ansaugkanal 26 werden die von der schwachen Luftströmung 22 bzw. der Kontraststelle 16 angelockten Insekten in das Falleninnere des Hohlraums 20 angesaugt. Wahlweise kann auch hier die schwache Luftströmung 22 einen Lockstoff transportieren.

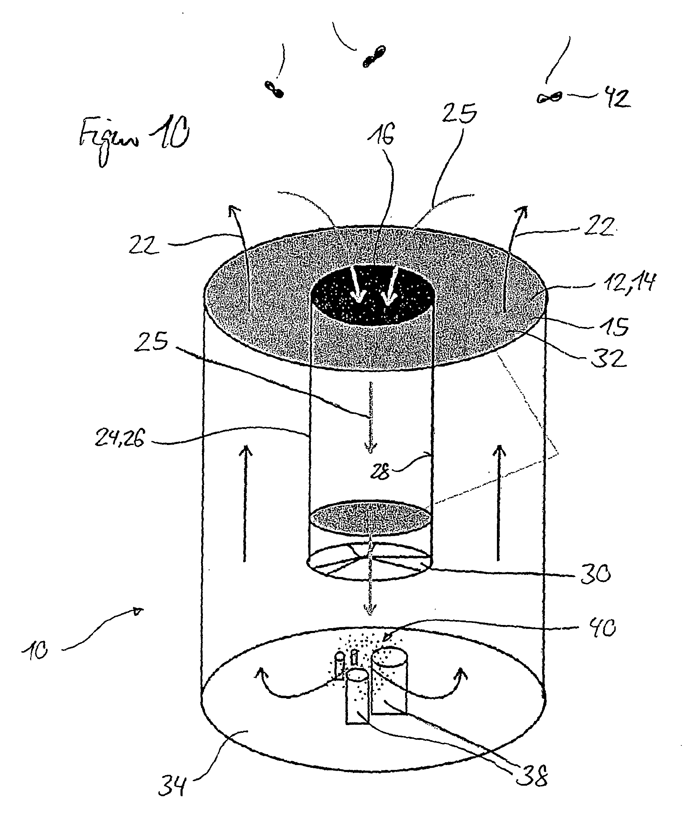

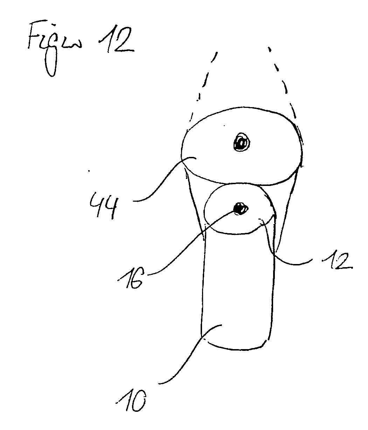

Die Figuren 6 und 7 zeigen eine alternative Variante einer Insektenfalle 10, bei denen die Fallenoberfläche 18 als helle Fläche 12 mit einer um diese ringförmig angeordneten Ansaugöffnung 24 ausgebildet ist. Die Ansaugöffnung 24 dient zur Erzeugung einer Ansaugströmung 25 in den Hohlraum 20 der Insektenfalle 10. Auch hier ist die helle Fläche 12 als Ausströmfläche 14 ausgebildet, durch die eine schwache Luftströmung 22 hindurchtritt. Die Luftströmung 22 kann wahlweise einen Lockstoff, wie zuvor beschrieben, transportieren.

Die Figuren 8 und 9 zeigen eine weitere alternative Variante, bei der mehrere dunkle Kontraststellen 16 auf einer hellen Fläche 12 angeordnet sind. Hierbei kann wahlweise nur die helle Fläche 12 oder die gesamte Fallenoberfläche 18 als Ausströmfläche 14 ausgebildet sein, durch die die schwache Luftströmung 22 nach außen tritt. Auch bei dieser Variante kann die schwache Luftströmung als Transportmittel für einen Lockstoff dienen.

Anhand der Figur 10 wird ein prinzipieller Aufbau der gesamten Insektenfalle 10 verdeutlicht. Die Insektenfalle 10 umfasst einen Hohlraum 20 innerhalb eines hohlzylindrischen Körpers, dessen Stirnfläche 32 als Fallenoberfläche 18 ausgebildet ist. Die Fallenoberfläche 18 umfasst eine helle Fläche 12, die als Ausströmfläche 14 ausgebildet ist und eine mittig darin angeordnete Kontraststelle 16 aufweist, die im gezeigten Ausführungsbeispiel als Ansaugkanal 26 mit dunkel ausgekleideter Innenmantelfläche 28 ausgebildet ist. Die helle Fläche 12 kann insbesondere durch ein Gewebe 15 gebildet sein, das auf die hohlzylindrische Falle gespannt ist und durch das die schwache Luftströmung 22 nach außen tritt.

Am unteren Ende des Ansaugkanals 26 ist ein Gebläse bzw. ein Ventilator 30 vorgesehen, der die Ansaugströmung 25 in den Hohlraum 20 der Insektenfalle 10 erzeugt. An einer Bodenfläche 34 des Hohlraums 20 sind mehrere Lockstoffbehälter 38 erkennbar, durch die jeweils eine Komponente eines Lockstoffs 40 gleichmäßig und in einer gewünschten Konzentration abgegeben wird, so dass der Lockstoff 40 in einem gewünschten, optimalen Mischungsverhältnis nach außen und in die schwache Luftströmung 22 abgegeben wird. Die helle Fläche 12 und der Durchmesser des Ansaugkanals 26 sind vorzugsweise so aufeinander abgestimmt, dass der einzige Ventilator 30 sowohl für die gewünschte Ansaugströmung von ca. 2 m/s als auch für die gewünschte schwache Luftströmung von ca. 5 bis 20 cm/s sorgen kann. Vorzugsweise ist auch vor dem Ventilator 30 ein Gewebe angebracht, das die Insekten daran hindert, in das Innere der Falle zu gelangen.

Eine besonders vorteilhafte Ausgestaltung kann darin bestehen, dass der Ansaugkanal 26 mit einem Einsatz versehen ist, der entnommen und entleert werden kann, sobald genug Insekten darin gefangen sind.

Die Ansaugluftströmung 25 ist zumindest so stark auszulegen, dass im Nahbereich der Falle 10 befindliche Insekten 42 in den Ansaugkanal 26 eingesaugt werden und diesen nicht mehr verlassen können.

Figur 11 zeigt eine schematische Darstellung einer alternativen Ausgestaltung der Insektenfalle 10, die in diesem Fall als Kugelkörper ausgebildet ist. Die Kugeloberfläche 36 der Insektenfalle 10 kann wahlweise als Ausströmfläche 14 ausgebildet sein. Vorzugsweise sind mehrere Ansaugkanäle 26 über die Kugeloberfläche verteilt angeordnet, so dass aus jeder Perspektive zumindest eine dunkle Kontraststelle 16 auf der hellen Kugeloberfläche erkennbar ist. Die kugelförmige Insektenfalle 10 entsprechend Figur 11 kann aufgrund ihrer wesentlich größeren wirksamen Oberfläche gegenüber der zylindrischen Variante der Figur 10 eine größere Effektivität aufweisen, da die optische Komponente mit den dunklen Kontraststellen 16 der Ansaugkanäle 26 in alle Richtungen wirkt.

Bei allen beschriebenen Varianten, die eine durch die Ausströmfläche 14 austretende schwache Luftströmung 22 aufweisen, kann diese wahlweise zusätzlich als Transportmedium für einen Lockstoff 40 dienen. Die schwache Luftströmung 22 bildet eine Wärmekonvektionsströmung eines menschlichen oder tierischen Körpers nach. Der Lockstoff 40 kann insbesondere menschliche oder tierische Ausdünstungen nachbilden. Wahlweise können jedoch auch andere Lockstoffe verwendet werden, die für die anzulockenden Insekten attraktiv sind.

Die innerhalb der hellen Fläche 12 angeordnete Kontraststelle 16 ist vorzugsweise ausreichend dunkel, so dass sie als optisches Reizsignal von den anzulockenden Insekten 42 erkannt wird. Durch Versuche konnte ermittelt werden, dass einzelne dunkle Kontraststellen auf hellem Hintergrund eine anlockende Signalwirkung auf viele Insekten ausüben, so dass eine Anordnung gemäß der Erfindung als optische Reizkomponente einer Insektenfalle genutzt werden kann.

Figur 12 zeigt schließlich eine frei aufgehängte Falle 10, aber nicht gemäß der Erfindung, mit einer oberhalb dieser und beabstandet zu dieser angeordneten Abdeckung 44. Die Falle 10 kann eine beliebige Form haben, bspw. eine hohlzylindrische oder kugelige entsprechend den Figuren 10 oder 11. Die Abdeckung 44 kann wahlweise transparent sein, um die helle Fläche 12 der Falle 10 mit der darin angeordneten dunklen Kontraststelle 14 für die Insekten sichtbar zu lassen. Alternativ kann die Abdeckung 44 selbst als helle Fläche mit darin angeordneter dunkler Kontraststelle ausgebildet sein, um die Insekten schon von weiterer Entfernung anlocken zu können.

Die erfindungsgemäße Insektenfalle eignet sich insbesondere für Stechmücken, Moskitos und andere stechende und/oder Blut saugende Fluginsektenarten.

## Patentansprüche

1. lnsektenfalle, insbesondere für Flug- und/oder Schädlingsinsekten, mit einer ebenen oder gewölbten, hellen Fläche (12) und mit einer Ausströmfläche (14) zur Erzeugung einer von der Fläche (14) ausgehenden, schwachen Luftströmung (22), und mit Einrichtungen zum Festhalten, Fangen und/oder Abtöten von angelockten Insekten (42) auf einer Oberfläche (18) der Insektenfalle (10) und/oder in einem darin angeordneten Hohlraum (20), **dadurch gekennzeichnet, dass** die Ausströmfläche (14) als helle Fläche (12) mit wenigstens einer innerhalb dieser angeordneten, dunklen Kontraststelle (16) ausgebildet ist.

2. Insektenfalle nach Anspruch 1, **gekennzeichnet durch** einen von der Falle (10) emittierbaren und für die anzulockenden Insekten (42) attraktiven Lockstoff (40).

3. Insektenfalle nach Anspruch 1 oder 2, **dadurch gekennzeichnet, dass** die dunkle Kontraststelle (16) als dunkler Ansaugkanal (26) ausgebildet ist.

4. Insektenfalle nach wenigstens einem der voranstehenden Ansprüche, **gekennzeichnet durch** wenigstens ein in der Falle angeordnetes Gebläse (30) zur Erzeugung einer Ansaugströmung (25) im Ansaugkanal (26) bzw. in der wenigstens einen Ansaugöffnung (24) und/oder der schwachen Luftströmung (22) aus der Ausströmfläche (14).

5. Insektenfalle nach wenigstens einem der voranstehenden Ansprüche, **gekennzeichnet durch** eine innerhalb der Falle (10) angeordnete Einrichtung zur gleichmäßigen Abgabe des Lockstoffs (40) an die schwache Luftströmung (22).

6. Insektenfalle nach wenigstens einem der voranstehenden Ansprüche, **dadurch gekennzeichnet, dass** die Falle (10) eine hohlzylindrische Form mit stirnseitig angeordneter Ausströmfläche (14) und darin angeordnetem, dunklem Ansaugkanal (26) aufweist.

7. Insektenfalle nach Anspruch 6, **gekennzeichnet durch** eine nach oben weisende Stirnfläche (32) der hohlzylindrischen Falle (10).

8. Insektenfalle nach Anspruch 6 oder 7, **gekennzeichnet durch** eine geschlossene Bodenfläche (34) mit darauf angeordneter Einrichtung zur Abgabe des Lockstoffs (40).

9. Insektenfalle nach wenigstens einem der Ansprüche 1 bis 5, **dadurch gekennzeichnet, dass** die Falle (10) eine Kugelform mit mehreren über deren Oberfläche verteilt angeordneten Ansaugkanälen (26) aufweist.

10. Insektenfalle nach Anspruch 9, **dadurch gekennzeichnet, dass** zumindest Teile der Kugeloberfläche (36) als Ausströmflächen (14) ausgebildet sind.

## Claims

1. Insect trap, in particular for flying and/or pest insects, with a planar or curved light surface region (12), and with an emanating surface (14) for producing a weak air-current (22) passing out through the surface (14), and with means for holding, trapping and/or killing attracted insects (42) on a surface (18) of the insect trap (10) and/or in its hollow interior (20), **characterized in that** the colour of the emanating surface (14) is light, and that at least one dark contrasting surface region (16) is located within the emanating surface (14).

2. Insect trap according to claim 1, comprising an insect attractant (40) which is emitted by the trap (10) and acts as a lure for the insects (42) to be trapped.

3. Insect trap according to claim 1 or 2, **characterized by** a dark, contrasting surface region (16) which functions as a dark aspiration duct or intake passage (26).

4. Insect trap according to at least one of the preceding claims, comprising at least one blower or fan (30) located the trap which produces an aspiration current (25) in the intake passage (26) or respectively in at least one of the aspiration openings (24) and/or produces a weak air-current (22) emanating from the output surface region (14).

5. Insect trap according to at least one of the preceding claims, comprising in the trap (10) interior a facility for the uniform distribution of the attractant (40) by means of the weak air-current (22).

6. Insect trap according to at least one of the preceding claims, **characterized by** a hollow cylindric form of the trap (10) which has at one end the emanating surface (14) surrounding the dark aspirational duct (26).

7. Insect trap according to claim 6, **characterized by** an upwardly directed end panel (32) of the hollow cylindrical trap (10).

8. Insect trap according to claim 6 or 7, **characterized by** a closed floor area (34) carrying means for supplying and emitting the attractant (40).

9. Insect trap according to at least one of the claims 1 to 5, **characterized in that** the trap (10) is spherical and contains several aspiration ducts (26) distributed all over the surface region.

10. Insect trap according to claim 9, **characterized in that** at least parts of the spherical surface region are formed as emanating surfaces (14).

## Revendications

1. Piège à insectes, notamment pour insectes volant et/ou nuisibles, comprenant une surface claire plane ou courbe (12) et une surface d'écoulement (14) destinée à produire un courant d'air faible (22) sortant de la surface (14), et comprenant des dispositifs servant à retenir, capturer et/ou tuer des insectes attirés (42) sur une surface (18) du piège à insectes (10) et/ou dans un espace creux (20) disposé dans celui-ci, **caractérisé en ce que** la surface d'écoulement (14) est réalisée sous forme de surface claire (12) avec au moins un point de contraste sombre (16) disposé à l'intérieur de celle-ci.

2. Piège à insectes selon la revendication 1, **caractérisé par** une substance d'appât (40) pouvant être émise par le piège (10) et attirante pour les insectes que l'on cherche à attirer (42).

3. Piège à insectes selon la revendication 1 ou 2, **caractérisé en ce que** le point de contraste sombre (16) est réalisé sous la forme d'un canal d'aspiration sombre (26).

4. Piège à insectes selon au moins l'une quelconque des revendications précédentes, **caractérisé par** au moins une soufflante (30) disposée dans le piège pour produire un courant d'aspiration (25) dans le canal d'aspiration (26) ou dans l'au moins une ouverture d'aspiration (24) et/ou le faible courant d'air (22) sortant de la surface d'écoulement (14).

5. Piège à insectes selon au moins l'une quelconque des revendications précédentes, **caractérisé par** un dispositif disposé à l'intérieur du piège (10) pour diffuser uniformément la substance d'appât (40) au niveau du faible écoulement d'air (22).

6. Piège à insectes selon au moins l'une quelconque des revendications précédentes, **caractérisé en ce que** le piège (10) présente une forme cylindrique creuse avec une surface d'écoulement (14) disposée du côté frontal et un canal d'aspiration sombre (26) disposé dans celle-ci.

7. Piège à insectes selon la revendication 6, **caractérisé par** une surface frontale (32) du piège cylindrique creux (10) tournée vers le haut.

8. Piège à insectes selon la revendication 6 ou 7, **caractérisé par** une surface de fond fermée (34) avec un dispositif disposé dessus pour diffuser la substance d'appât (40).

9. Piège à insectes selon au moins l'une quelconque des revendications 1 à 5, **caractérisé en ce que** le piège (10) présente une forme sphérique avec plusieurs canaux d'aspiration (26) répartis sur sa surface.

10. Piège à insectes selon la revendication 9, **caractérisé en ce que** certaines parties au moins de la surface sphérique (36) sont réalisées sous forme de surfaces d'écoulement (14).
